# EUROPEAN PATENT APPLICATION

(11) **EP 2 138 863 A1**
(43) Date of publication of application: **30.12.2009**
(21) Application number: 09161853.8
(22) Date of filing: 03.06.2009
(51) Int. Cl.: G01S 13/56, G01S 13/62, G01S 7/03

(54) **Microwave direction sensing planar sesnor**

(30) Priority: 06.06.2008 US 134699
(71) Applicant: Honeywell International Inc., Morristown, NJ 07962 (US)
(72) Inventor: Wu, Xiao Dong, Morristown, NJ 07962-2245 (US)
(74) Representative: Buckley, Guy Julian

(57) **Abstract**

A microwave transceiver used in a microwave motion detector for detecting the direction of movement of a moving object in a detection area. The microwave transceiver has a multilayered design with an oscillator/mixer card and an antenna card bonded together, with a ground plane sandwiched between the cards. The oscillator/mixer card and the antenna card both have surface mounted elements. The oscillator circuit of the oscillator/mixer card has a surface mounted transistor chip wire bonded in the oscillator circuit, and a pair of signal mixer circuits each having a surface mounted chip wire bonded in the circuits for generating Doppler signals. The oscillator/mixer card further has a signal phase shifter circuit for shifting the phase of a reflected signal inputted to one of the signal mixers. The Doppler signals generated by the mixers arc utilized to determine a direction of movement of the moving object.

## Description

### FIELD OF THE INVENTION

The present invention relates generally to microwave transceivers used in motion detectors, such as Doppler radar sensors for detecting a moving target in the security industry. More particularly, the present invention relates to a microwave planar transceiver which employs a chip on board design where all components can be surface mounted and a microwave motion detector including the microwave planar transceiver for detecting the direction of a moving target in a detection area monitored by the motion detector.

### BACKGROUND

Microwave motion detector employing a microwave transceiver is able to detect the existent of a moving object, such as an intruder, in an area monitored by the motion detector. Generally, the motion detector transmits a microwave signal toward the detection area and in the event that a moving object passes through the monitored area, the microwave signal is reflected back (echo) from such movement and is modulated due to the Doppler Effect. When a signal is reflected from a moving object, it is shifted in frequency. The shift in frequency is called the Doppler Effect and is directly proportional to the target velocity. Typically, a maximum frequency shift occurs when the object is moving straight towards the sensor and a minimum frequency shift occurs when the object is moving at 90 degrees relative to the sensor. All Doppler sensors use this principle to detect moving objects in the detection area.

U.S. Patent No. 6,087,972, to Puglia et al., describes a microwave motion detector utilizing Doppler frequency shift to determine the velocity and direction of a moving object. The Puglia sensor includes a mixer having a single intermediate frequency output, a phase shifter, and a receiver/transmit antenna mounted in series. Specifically, the intermediate frequency output is switched synchronously with the phase shifter which is switched between 0° phase shift and 45° phase shift. The Puglia sensor adopts the conventional packaging technology, which incurs more complicated manufacturing process and accordingly raises the cost of manufacturing.

Thus, it would be very advantageous to provide a novel microwave transceiver and a microwave motion detector using the transceiver, which are easy to manufacture without compromising the performance of the detector.

### SUMMARY OF THE INVENTION

According to one aspect of the present invention, disclosed is a microwave transceiver used in a microwave motion detector for detecting the direction of movement of a moving object in a detection area, which includes an oscillator/mixer card, an antenna card and a ground plane layer disposed between the oscillator/mixer card and the antenna card when the oscillator/mixer card and the antenna card are bonded together. The microwave transceiver is in the form of a multilayered circuit board and all the elements of the transceiver adopt a chip on board design. The oscillator/mixer card includes: an oscillator circuit configured to generate a microwave signal, the oscillator circuit having at least one surface mounted transistor chip wire bonded in the oscillator circuit; a first signal mixer circuit coupled to the oscillator circuit, having at least one surface mounted chip wire bonded in the first signal mixer circuit, the first signal mixer circuit configured to receive and combine at least a portion of the microwave signal generated by the oscillator circuit and a reflected signal reflected by the moving object in the detection area, thereby generating a first intermediate frequency signal; a signal phase shifter circuit configured to shift the phase of the reflected signal; and a second signal mixer circuit coupled to the oscillator circuit, having at least one surface mounted chip wire bonded in the second signal mixer circuit, the second signal mixer circuit configured to receive at least a portion of the microwave signal generated by the oscillator circuit and the reflected signal shifted by the signal phase shifter, thereby generating a second intermediate frequency signal. The antenna card includes a transmit antenna coupled to the oscillator circuit for transmitting at least a portion of the microwave signal generated by the oscillator circuit into the detection area, and a receive antenna coupled to the first signal mixer circuit and the second signal mixer circuit, for receiving the reflected signal reflected by the moving object.

According to another aspect of the present invention, disclosed is a method for detecting a direction of movement of a moving object in a detection area, which includes: generating at least one microwave signal; transmitting the at least one microwave signal to the detection area; receiving at least one reflected microwave signal based on the microwave signal transmitted to the detection area and reflected by the moving object; combining a portion of the microwave signal with the reflected microwave signal to generate a first intermediate frequency signal; shifting the phase of the reflected microwave signal; combing a portion of the microwave signal with the shifted microwave signal to generate a second intermediate frequency signal; and processing the first intermediate frequency signal and the second intermediate frequency signal to determine a direction of movement of the moving object in the detection area by comparing the relative phase difference between the first and second intermediate frequency signals.

### BRIEF DESCRIPTION OF THE DRAWINGS

These and other features, benefits, and advantages of the present invention will become apparent by reference to the following text and figures, with like reference numbers referring to like structures across the view, wherein

Figure 1 is a functional block diagram of one exemplary embodiment of a microwave transceiver according to one aspect of the present invention;

Figure 2 is a microstrip circuit layout, viewed from the patterned side, of one exemplary embodiment of an oscillator/mixer card corresponding to the microwave transceiver configuration of Figure 1;

Figure 3 is a detailed view of a surface mounted microwave FET (Field Effect Transistor) chip wire bonded in the oscillator circuit of Figure 2;

Figure 4 is a detail view of a surface mounted chip wire bonded in the mixer circuit of Figure 2;

Figure 5 is s plan view of the patterned side of one exemplary embodiment of an antenna card corresponding to the microwave transceiver configuration of the Figure 1;

Figure 6 is a plan view of the ground plane side of the oscillator/mixer card of Figure 2; and

Figure 7 is a flow chart illustrating one exemplary embodiment of a method for detecting the presence of a moving object in a detection area according to another aspect of the present invention.

### DETAILED DESCRIPTION OF THE INVENTION

The present invention now will be described in detail hereinafter with reference to the accompanying drawings, in which preferred embodiments of the invention are shown. However, this invention may be embodied in many different forms and should not be construed as limited to the embodiments set forth herein. Like numerals refer to like elements throughout.

As used herein, "configured to" and the like refer to mechanical or structural connections between elements to allow the elements to cooperate to provide a described effect; these terms also refer to operation capabilities of electrical elements such as analog or digital computers or application specific devices that are programmed to perform a sequel to provide an output in response to given input signals.

The present invention comprises a high frequency planar microwave transceiver design that employs a flexible multilayer circuit board. As used herein, the term "high frequency" means a range from approximately few GHz to approximately 90 GHz. The oscillator in the present invention is a low Q oscillator as compared to high Q oscillators in conventional transceivers, and does not require use of a dielectric resonator, although one could optionally be used.

Furthermore, instead of using soldered packaged devices for the oscillator and mixers that usually are either not available or too expensive at higher microwave frequency, the present invention uses a wire bonded transistor chip for the oscillator and a pair of wire bonded chips for the mixers, overcoming the limitation of the packages. These characteristics, as well as the circuit layout and the use of a DC block incorporated into the circuit instead of using a chip capacitor for the DC block, enables operation of the transceiver at higher frequencies.

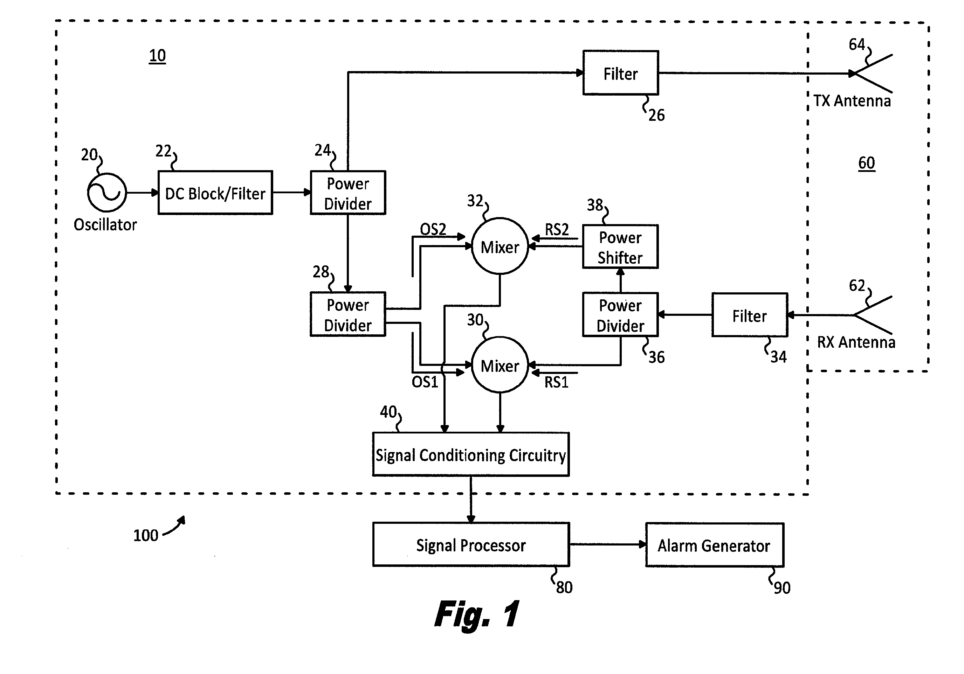

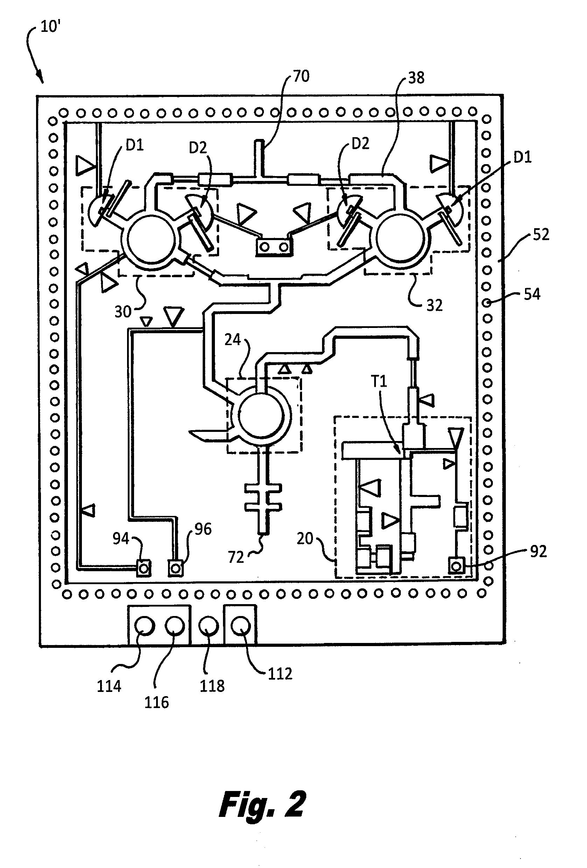

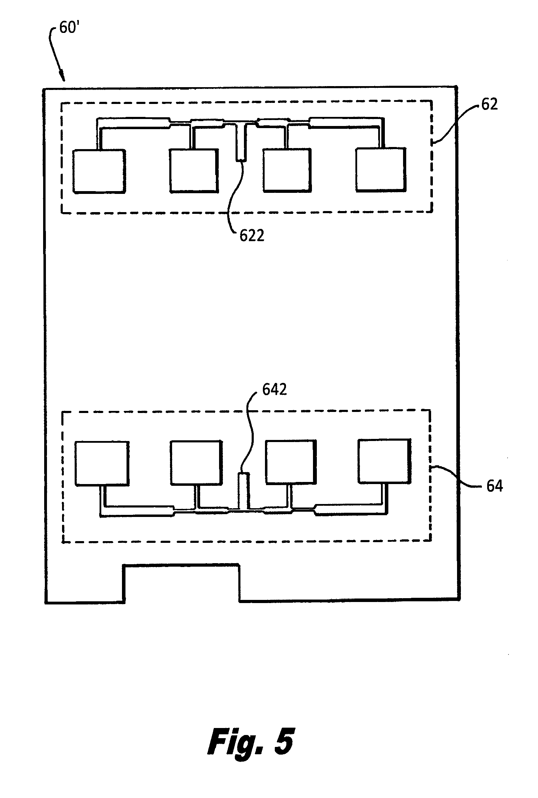

Referring to Figure 1, a functional block diagram of one exemplary embodiment of a microwave transceiver used in a motion detector according to one aspect of the present invention is illustrated and designated as 100 in the figure. In the embodiment shown, the microwave transceiver 100 includes generally an oscillator/mixer section 10 and an antenna section 60. In this exemplary embodiment, both the oscillator/mixer section 10 and the antenna section 60 are in the form of a card, which will be described later in detail with reference to Figures 2 and 5. The oscillator/mixer card and the antenna card are overlaid and bonded as an integral structure, for example, by a bonding film with a common ground layer sandwiched there between, thereby providing a multilayer circuit board.

The oscillator/mixer section 10 includes an oscillator 20 configured to generate a plurality of pulsed microwave signals at a pre-determined frequency. In the exemplary embodiment of the invention, the oscillator 20 is a low Q oscillator. The output signal from the oscillator 20 is couple to the input of a first power divider 24 through a signal modulating module 22 including a direct current (DC) block and a filter. Specifically, the DC block is configured from microstrips rather than consisting of a discrete capacitor as in conventional transceivers.

A portion of the local oscillator signal from a first output of the first power divider 24 is coupled to a transmit antenna 64 of the antenna section 60 through a filter 26. The transmit antenna 64 performs to transmit the portion of the oscillator signal into a detection area monitored by a microwave motion detector using the microwave transceiver 100. The antenna section 60 is also configured to receive any reflected signal from a moving target in the monitored area through a receive antenna 62. In one exemplary embodiment of the present invention, the receive antenna 62 and the transmit antenna 64 are separately formed patch-array antennas, which will be described later with reference to Figure 5.

A portion of the local oscillator signal from a second output of the first power divider 24 is coupled to a second power divider 28, which is in turn coupled to a first signal mixer 30 and a second signal mixer 32, respectively. As shown in Figure 1, an oscillator signal OS1 from the first output of the second power divider 28 is coupled to the first input of the first signal mixer 30 and an oscillator signal OS2 from the second output of the second power divider 28 is coupled to the first input of the second signal mixer 32.

The reflected signal received by the receive antenna 62 is coupled to a third power divider 36 through a filter 34. A reflected signal RS 1 from the first output of the third power divider 36 is coupled to the second input of the first signal mixer 30. A reflected signal RS2 from the second output of the third power divider 36 is coupled to the second input of the second signal mixer 32 through a phase shifter 38. The phase shifter 38 functions to shift the phase of signals passing through it. Accordingly, the reflected signal RS2 coupled to the second signal mixer 32 has a phase shifted relative to the reflected signal RS1 coupled to the first signal mixer 30. In one exemplary embodiment of the invention, the reflected signal RS2 and the reflected signal RS1 have a phase difference of, for example, approximately 45 to 90 degrees.

The first signal mixer 30 combines the reflected signal RS 1 and the oscillator signal OS1 to provide a first intermediate frequency (IF 1) signal that comprises a Doppler frequency. The second signal mixer 32 combines the reflected signal RS2 and the oscillator signal OS2 to provide a second intermediate frequency (IF2) signal that comprises the Doppler frequency.

While either IF1 or IF 2 can be used separately for determining the detection of a target in the detection zone, IF 1 and IF2 can be combined to determine the direction of motion of the target towards or away from the detector including the microwave transceiver 100.

In the illustrated embodiment, the microwave transceiver 100 further includes a signal conditioning circuit 40 coupled to the mixers 30 and 32, configured to modulate the IF signals generated by the mixers prior to transmitting the conditioned signals to a signal processor 80. For example, the signal conditioning circuitry 40 may includes at least one filter and one amplifier.

The signal processor 80 processes the conditioned signals from the conditioning circuit 40 to determine whether there is a motion indicative of an intrusion in the detection area and the direction of the motion relative to the microwave transceiver 100 in case an intrusion has been detected by comparing the relative phase difference between first and second intermediate frequency outputs. The signal processor 80 may includes an A/D converter and a digital signal processor. If an intrusion is indicated, the microprocessor 80 sends a signal to an alarm generator 90, for triggering an alarm. The alarm can be in any suitable form, such as a visual alarm including an illumination of a light or audible alarm including a whistle or buzz.

Figure 2 illustrates the inventive microstrip layout of the oscillator/mixer section 10 of the microwave transceiver 100 as viewed from the component side of an oscillator/mixer card 10' that supports the circuitry of the oscillator/mixer section 10. The performance of the microwave transceiver 100 at high frequencies is enabled by the use of surface mounted chip devices in the oscillator and mixers without the limitation of the packages. All of the microstrips can be seen in relation to each other, and in relation to the transmission lines, filters and other components that are formed thereby.

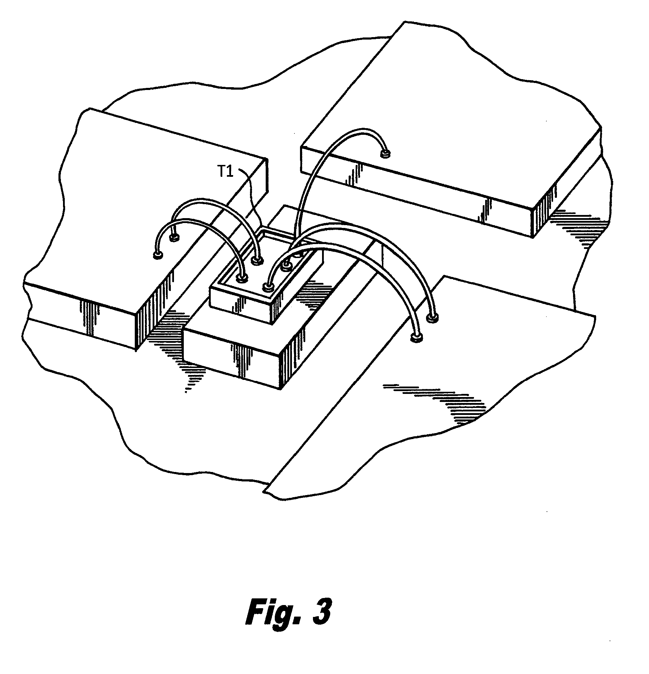

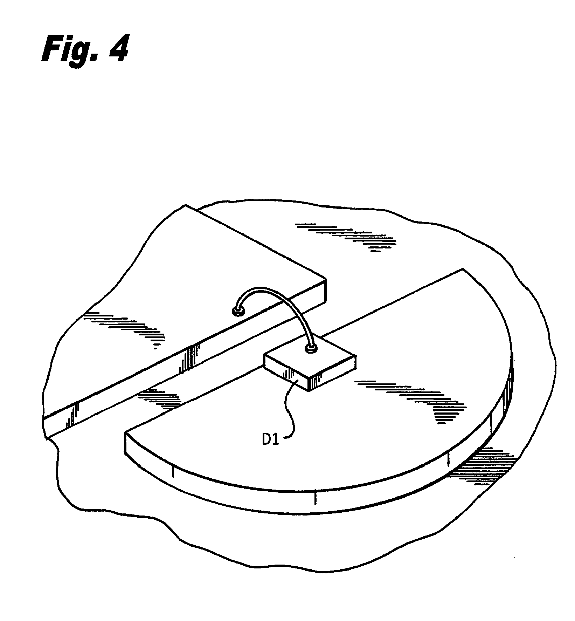

In one exemplary embodiment, the oscillator 20 includes a surface mounted microwave FET chip T1 for generating a plurality of oscillator signals. The oscillator 20 in the present invention does not require use of a dielectric resonator. Each of the first signal mixer 30 and the second signal mixer 32 includes two surface mounted Schottky chips D1 and D2 for generating a Doppler effect signal by combining a portion of the oscillator signals and a portion of the signal reflected by a moving target in the detection zone. For example, FET T1 is a surface mounted microwave FET chip such as a type MWT-LP7 available from Microwave Technology, Inc, Other devices, such as HBT, HEMT, PHEMT can be used also.
The Schottky chips D1 and D2 are surface mounted Schottky chips such as a type HVMSK-1 or TOMSK-1 available from Metelics. As illustrated in Figures 3 and 4, these chip devices are wire bonded to the microstrips in Figure 2, instead of soldered as in conventional circuits. Furthermore, due to the multilayered design of the transceiver and the surface mounted features of the chips, the oscillator 20 does not require use of a dielectric resonator, while still able to maintain a satisfactory performance.

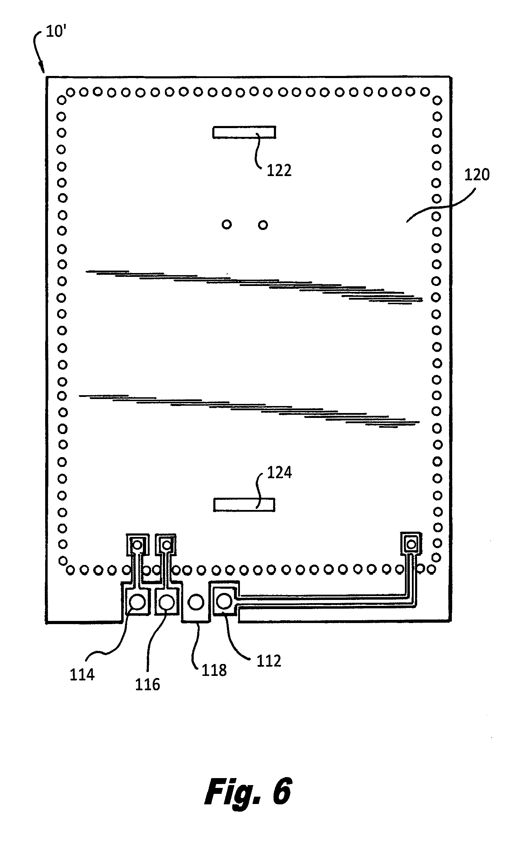

Referring back to Figure 2, the figure also illustrates a ground pattern 52 and associated ground vias 54 for bonding to a ground plane 120 on the back side of the oscillator/mixer card 10' shown in Figure 6. The ground plane 120 is patterned on the back side of the oscillator/mixer card 10' to provide a connection path between a DC bias/pulse input 92 and a corresponding terminal 112, a first Doppler output 94 and a corresponding terminal 114, and a second Doppler output 96 and a corresponding terminal 116. Terminal 118 is the ground connection. The oscillator/mixer card 10' illustrated in Figure 2 further includes an antenna input microstrip 70 for coupling to the receive antenna 62 and an antenna output microstrip 72 for coupling to the transmit antenna 64. The manner in which the antennas are coupled will be described with reference to Figures 5 and 6. In one exemplary embodiment, the microstrips shown in Figure 2 are formed from copper having a thickness of approximately 0.7 mils.

Figure 5 illustrates a plan view of the patterned side of an antenna card 60' corresponding to one exemplary embodiment of the microwave transceiver 100 shown in Figure 1. The antenna card 60' and the oscillator/mixer card 10' are boned together to constitute a multilayered transceiver. The size of the antenna card 60' is generally in line with that of the oscillator/mixer card 10', so that the cards can be overlaid and bonded to provide an integral structure.

The antenna card 60' is patterned with copper to form a patch array including the receive antenna 62 and the transmit antenna 64. In the shown exemplary embodiment, the antennas are a 1×4 array. However, the antenna arrays may be 1×4, 2×2 or N×M array depending on the particular security requirements. In addition, the antenna array can be a slot array. The antenna can also be a non-array antenna, such as a single patch, single slot, horn antenna, or any combination of the above antennas. The receive antenna 62 has a coupling microstrip 622 for coupling the receive antenna 62 to the corresponding microstrip 70 on the oscillator/mixer card 10'. The transmit antenna 64 has a coupling microstrip 642 for coupling the transmit antenna 64 to corresponding microstrip 72 on the oscillator/mixer card 10'.

Figure 6 illustrates the ground plane 120 formed on the backside of the oscillator/mixer card 10'. For example, the ground plane 120 is in the form of a copper layer. The copper layer 120 has a pair of slots 122 and 124, through which the microstrips 70 and 72 are coupled to the receive antenna 62 and the transmit antenna 64, respectively. The slot 122 is orthogonal to the microstrip 622 of the receive antenna 62 on the antenna card 60' and the microstrip 70 of the mixers 30 and 32 on the oscillator/mixer card 10'. The slot 124 is orthogonal to the microstrip 642 of the transmit antenna 64 on the antenna card 60' and the microstrip 72 on the power divider 24 of the oscillator/mixer card 10'.

The dimensional parameters for the microstrips identified in Figures 2-6 can be referred to in co-assigned U.S. Patent No. 6,756,936 to Xiaodong Wu.

The oscillator/mixer card 10' and the antenna card 60' can be fabricated from a soft substrate material. The two cards are bonded together, for example, by a bonding film, sharing a common ground plane. The resultant structure includes the antenna card 60' superimposed over the oscillator/mixer card 10', with a copper layer of the ground plane 120 sandwiched there between. Each antenna has a respective microstrip that substantially overlies an associated microstrip on the microwave circuit board. The ground plane layer has, for each antenna, a respective slot to provide coupling between the antenna microstrip and the associated microstrip on the oscillator/mixer card.

The microwave transceiver 100 according to one exemplary embodiment of the present invention has a low Q oscillator that does not require a dielectric resonator to stabilize its oscillation, although one could optionally be used if desired. Furthermore, the power divider 24 of the present invention is, for example, in the form of a hybrid ring, which has the capability of providing buffering and isolation between the transmitter and receiver.

The microwave transceiver 100 according to one exemplary embodiment of the present invention is a chip on board design, in which all components can be surface mounted. The microwave transceiver 100 according to one exemplary embodiment of the present invention is simple, low cost, lightweight, compact and low current consumptive, and thus suitable for automatic production. A microwave motion detection adopting the microwave transceiver 100 according to an exemplary embodiment of the invention is suitable for wireless applications.

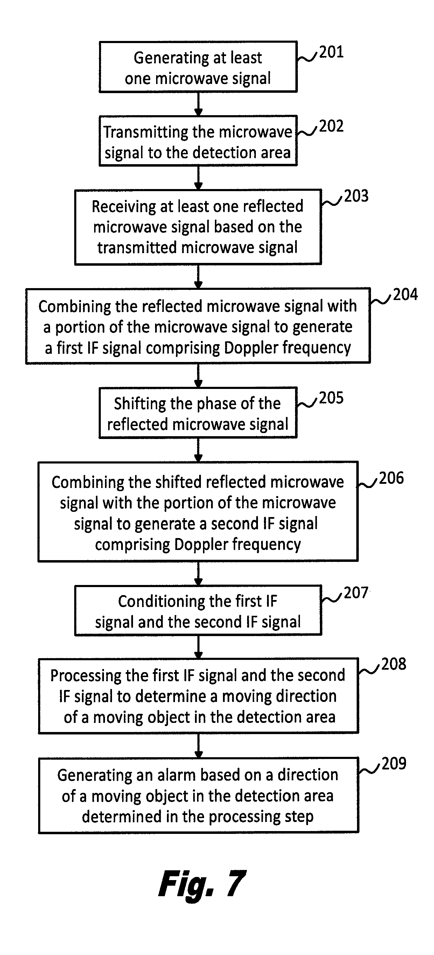

Figure 7 is a flowchart illustrating an embodiment of a method for detecting the presence as well as the moving direction of an object in a detection area, according to another aspect of the present invention. It is noted that the different steps of the method are not limited to the sequence as would be described. Instead, the steps can be performed in any suitable orders.

At steps 201 and 202, at least one microwave signal is generated and subsequently transmitted to a detection area monitored by a motion detector.

At step 203, the microwave signal is reflected by a moving object in the detection area and further received by the motion detector. At step 204, the received signal is combined with a portion of the microwave signal generated in step 201, to produce a first IF signal comprising a Doppler frequency.

At step 205, the phase of the received signal is shifted, for example, approximately 45-90 degrees relative to the received signal in step 204. At step 206, the received microwave signal with shifted phase is combined with a portion of the microwave signal generated in step 201, to produce a second IF signal comprising a Doppler frequency.

At step 207, the first IF signal and the second IF signal are conditioned. At step 208, the conditioned IF signals are processed to determine the presence as well as the moving direction of an object in the detection area monitored by the detector, such as an intruder.

At step 209, based on the processing result in step 208, an alarm is generated, indicative of the existence and/or the moving direction of the intruder. The method according to an aspect of the present invention is capable of detecting the presence as well as moving direction of an object positively, and thus avoids generation of false alarms such as object vibration by gating the time for the object moving in one direction.

The invention has been described herein with reference to particular exemplary embodiments. Certain alterations and modifications may be apparent to those skilled in the art, without departing from the scope of the invention. The exemplary embodiments are meant to be illustrative, not limiting of the scope of the invention, which is defined by the appended claims.

## Claims

1. A microwave transceiver used in a microwave motion detector for detecting the direction of movement of a moving object in a detection area, comprising:
an oscillator/mixer card, comprising:
an oscillator circuit configured to generate at least one microwave signal, the oscillator circuit having at least one surface mounted transistor chip wire bonded in the oscillator circuit;
a first signal mixer circuit coupled to the oscillator circuit, having at least one surface mounted chip wire bonded in the first signal mixer circuit, the first signal mixer circuit configured to receive and combine at least a portion of the microwave signal generated by the oscillator circuit and a reflected signal reflected by the moving object in the detection area, thereby generating a first intermediate frequency signal;
a signal phase shifter circuit configured to shift the phase of the reflected signal; and
a second signal mixer circuit coupled to the oscillator circuit, having at least one surface mounted chip wire bonded in the second signal mixer circuit, the second signal mixer circuit configured to receive at least a portion of the microwave signal generated by the oscillator circuit and the reflected signal shifted by the signal phase shifter, thereby generating a second intermediate frequency signal;
an antenna card, comprising:
a transmit antenna coupled to the oscillator circuit for transmitting at least a portion of the microwave signal generated by the oscillator circuit into the detection area; and
a receive antenna coupled to the first signal mixer circuit and the second signal mixer circuit, for receiving the reflected signal reflected by the moving object, and
a ground plane layer disposed between the oscillator/mixer card and the antenna card when the oscillator/mixer card and the antenna card are bonded together.

2. The microwave transceiver as recited in claim 1, wherein the transmit antenna comprises a microstrip and the oscillator/mixer card comprises a corresponding microstrip, the microstrips substantially overlying each other when the oscillator/mixer card and the antenna card are bonded together.

3. The microwave transceiver as recited in claim 1, wherein the receive antenna comprises a microstrip and the oscillator/mixer card comprises a corresponding microstrip, the microstrips substantially overlying each other when the oscillator/mixer card and the antenna card are bonded together.

4. The microwave transceiver as recited in claim 2, wherein the ground plane layer comprises a slot to provide coupling between the microstrip of the transmit antenna and the corresponding microstrip of the oscillator/mixer card.

5. The microwave transceiver as recited in claim 3, wherein the ground plane layer comprises a slot to provide coupling between the microstrip of the receive antenna and the corresponding microstrip of the oscillator/mixer card.

6. The microwave transceiver as recited in claim 1, wherein the chip comprises a Schottky chip.

7. The microwave transceiver as recited in claim 1, wherein the oscillator circuit comprises a low Q oscillator.

8. The microwave transceiver as recited in claim 1, wherein the signal phase shifter is configured to shift the phase of the reflected signal approximately 45-90 degrees.

9. The microwave transceiver as recited in claim 1, wherein the oscillator/mixer card further comprises a first power divider circuit, an input of the first power divider coupled to the oscillator circuit, a first output of the first power divider coupled to the transmit antenna and a second output of the first power divider coupled to the first signal mixer circuit and the second signal mixer.

10. The microwave transceiver as recited in claim 9, wherein the oscillator/mixer card further comprises a second power divider circuit, an input of the second power divider coupled to the second output of the first power divider and a first output of the second power divider coupled to the first signal mixer circuit and a second output of the second power divider coupled to the second signal mixer circuit.

11. The microwave transceiver as recited in claim 1, further comprising a signal conditioning circuit coupled to the first signal mixer circuit and the second signal mixer circuit, for modulating the first intermediate frequency signal generated by the first signal mixer circuit and the second intermediate frequency signal generated by the second signal mixer circuit.

12. The microwave transceiver as recited in claim 11, further comprising a signal processor coupled to the signal conditioning circuit, for processing the first intermediate frequency signal and the second intermediate frequency signal modulated by the signal conditioning circuit.
